# EUROPÄISCHE PATENTANMELDUNG

(11) **EP 1 746 325 A2**
(43) Veröffentlichungstag der Anmeldung: **24.01.2007**
(21) Anmeldenummer: 06010745.5
(22) Anmeldetag: 24.05.2006
(51) Int. Cl.: F16L 11/112, F16L 11/115, F16L 11/11, F16L 11/15

(54) **Stabilisierungseinrichtung für einen Wellschlauch und Verfahren zur Aufbringung der Stabilisierungseinrichtung auf einem Wellschlauch**

(30) Priorität: 22.07.2005 DE 102005034389
(71) Anmelder: VERITAS AG, 63571 Gelnhausen (DE)
(72) Erfinder: Cöl, Isa, 60385 Frankfurt/Main (DE); Rösch, Thomas, 63589 Linsengericht-Grossenhausen (DE); Hempel, Werner, 61130 Nidderau (DE); Seyler, Andreas, 63584 Gründau (DE)
(74) Vertreter: Grünecker, Kinkeldey, Stockmair & Schwanhäusser Anwaltssozietät

(57) **Zusammenfassung**

Die Erfindung bezieht sich auf eine Stabilisierungseinrichtung für einen Wellschlauch (2), der wenigstens einen Wellabschnitt mit zumindest einer gegenüber dem Wellschlauch (2) vorstehenden, sich wenigstens abschnittsweise im Wesentlichen in Umfangsrichtung des Wellschlauchs (2) erstreckenden Wellung (3) aufweist, wobei die Stabilisierungseinrichtung (1) wenigstens ein Ringsegment (5) aufweist, das bei auf dem Wellschlauch (2) montierten Zustand den Wellschlauch (2) benachbart zur Wellung (3) umfänglich umgibt. Um das Schwingungsverhalten von Wellschläuchen, insbesondere Ladeluftschläuchen, verbessern zu können, ist erfindungsgemäß eine Stabilisierungseinrichtung (1) vorgesehen, bei der das Ringsegment (5) ein im Wesentlichen flächiges Gebilde ist, das einzelne und zueinander angeordnete Fäden oder Stränge aufweist.

## Beschreibung

Die vorliegende Erfindung bezieht sich auf eine Stabilisierungseinrichtung für einen Wellschlauch, der wenigstens einen Wellabschnitt mit zumindest einer gegenüber dem Wellschlauch vorstehenden, sich wenigstens abschnittsweise im Wesentlichen in Umfangsrichtung des Wellschlauchs erstreckenden Wellung aufweist, wobei die Stabilisierungseinrichtung wenigstens ein Ringsegment aufweist, das bei auf dem Wellschlauch montierten Zustand den Wellschlauch benachbart zur Wellung umfänglich umgibt.

Eine derartige Stabilisierungseinrichtung ist beispielsweise aus der Deutschen Patentanmeldung 10 2004 038 087.2-24 bekannt. Um das Geräuschniveau, verursacht durch die Schwingungen eines Wellschlauchs bei z.B. der Verwendung als Ladeluftschlauch, zu reduzieren, wird der Wellschlauch in der betreffenden Druckschrift mit ringförmigen Halteeinrichtungen stabilisiert, die jeweils in den Tälern zwischen den Wellen angeordnet sind. Die ringförmigen Halteeinrichtungen sind weiterhin über Verbindungsabschnitte, die sich zwischen den Halteabschnitten die Wellungen überbrückend erstrecken, miteinander verbunden. Durch diese Anordnung der Stabilisierungseinrichtung wird den durch den Betrieb auftretenden Dehnungen in Längs- und Querrichtung des Wellschlauchs effektiv entgegengewirkt, wodurch insgesamt die Schwingungsneigung des Wellschlauchs erheblich reduziert wird. Jedoch kann diese Lösung den steigenden Anforderungen, beispielsweise hinsichtlich Gewichtsoptimierung, Flexibilität oder Montageerleichterung, nicht in allen Punkten gerecht werden.

Aufgabe der Erfindung ist es daher, eine Stabilisierungseinrichtung der eingangs genannten Art zu verbessern, so dass die radiale Aufweitung bzw. die axiale Längung eines Wellschlauchs reduziert wird, wodurch sich dass Geräuschverhalten eines Wellschlauchs verbessern lässt. Gleichzeitig wird durch die erfindungsgemäße Stabilisierungseinrichtung eine hohe Flexibilität, ein niedriges Gewicht und ein geringer Montageaufwand erreicht.

Diese Aufgabe wird erfindungsgemäß gelöst durch eine Stabilisierungseinrichtung der eingangs genannten Art, bei der das Ringsegment ein im Wesentlichen flächiges Gebilde ist, das einzelne und zueinander angeordnete Fäden oder Stränge aufweist.

Es hat sich gezeigt, dass durch ein solches Ringsegment der Verschleiß an den Kontaktstellen zwischen Ringsegment und Wellschlauch weitestgehend vermieden wird. Gegenüber relativ steifen Ringsegmenten, beispielsweise aus massivem Kunststoff, können sich die erfindungsgemäßen Ringsegmente, die in den Tälern zwischen den Wellen angeordnet sind, im Wesentlichen der Kontur des Wellentales anpassen. Dadurch werden hohe Flächenpressungen, wie sie bei Verwendung von steifen Ringsegmenten im Bereich der Kontaktstelle zwischen Ringsegment und Wellschlauch auftreten, vermieden. Besonders hohe Flächenpressungen ergeben sich im Falle von steifen Ringsegmenten an Stellen, wo der Wellschlauch gekrümmt ist, wobei eine gekrümmte Form des Wellschlauchs aus den meist engen Einbaumaßen erforderlich ist. Hierbei kommt es auf einer Seite des Wellschlauchs zur Reduzierung des Abstands zwischen zwei benachbarten Wellungen, und die Wellenflanken üben eine zusätzliche Kraft auf das zwischen den benachbarten Wellungen positionierte Ringsegment aus, wodurch sich die Flächenpressung im Bereich der Kanten des Ringsegments nochmals erhöht. Problematisch sind die beschriebenen hohen Flächenpressungen für den Verschleiß, der an den Kontaktstellen zwischen Ringsegment und Wellschlauch auftritt. Der Verschleiß resultiert dabei aus minimalen Relativbewegungen zwischen Wellschlauch und Ringsegment, die sich aufgrund der im Betrieb üblichen Schwingungen ergeben. Die beschriebenen Relativbewegungen rufen eine Reibbeanspruchung an den Kontaktstellen hervor, was schließlich zu Verschleiß führt. Erfahrungsgemäß kommt es dabei an Stellen hoher Flächenpressung zu verstärktem Materialabtrag. Der Verschleiß kann sowohl am Ringsegment, als auch am Wellschlauch auftreten. Letztlich führt verstärkter Verschleiß zu Rissen im Wellschlauch oder im Ringsegment und damit zu einer verminderten Funktionsfähigkeit von Wellschlauch bzw. Ringsegment.

Zudem ist ein Wellschlauch, der mit einer erfindungsgemäßen Stabilisierungseinrichtung versehen ist, äußerst flexibel und genügt hohen Anforderungen bezüglich des Einbaus und des Schwingungsverhaltens.

Von Vorteil kann es sein, dass das Ringsegment eine gestrickte oder gewirkte Struktur aufweist. Dadurch ergibt sich eine gute Flexibilität des Ringsegments in Längsrichtung des Wellschlauchs bei gleichzeitig hoher Festigkeit und geringer Dehnung in Umfangsrichtung. Weiterhin kann durch die Gestricke- oder Gewirkestruktur gezielt Einfluss auf die mechanischen Eigenschaften des Ringsegments in Hinsicht auf die geforderten Stabilisierungs- und Dämpfungsmaßnahmen genommen werden.

Von Vorteil kann es weiterhin sein, dass das Ringsegment eine gewebte oder geflochtene Struktur aufweist, wodurch eine besonders hohe Festigkeit in Umfangsrichtung und ausreichender Flexibilität in Längsrichtung des Wellschlauchs erzielt wird. Auch hier kann durch die Struktur des Gewebes bzw. Geflechts gezielt Einfluss auf die mechanischen Eigenschaften des Ringsegments in Hinsicht auf die geforderten Stabilisierungs- und Dämpfungsmaßnahmen genommen werden

Es kann sich als günstig erweisen, dass die das Ringsegment bildenden Fäden oder Stränge aus einem Naturstoff bestehen, vorzugsweise aus Baumwolle oder Cellulose. Diese Stoffe sind sehr kostengünstig und äußerst umweltfreundlich und weisen ein gutes Dämpfungsvermögen auf.

Weiterhin kann es sich als günstig erweisen, wenn die das Ringsegment bildenden Fäden oder Stränge aus einem polymeren Werkstoff bestehen, vorzugsweise aus Polyester, Polyamid, Polypropylen, Polyethylen oder Aramid. Diese Werkstoffe weisen gute mechanische Kennwerte auf, besitzen sehr gute Reibeigenschaften und darüber hinaus eine hohe Beständigkeit gegenüber im Motorraum üblicherweise vorkommenden Medien. Weiterhin besitzen polymere Werkstoffe ein hohes mechanisches Dämpfungsvermögen.

Vorteilhaft kann es darüber hinaus sein, dass die das Ringsegment bildenden Fäden oder Stränge aus einem anorganisch-nichtmetallischen oder einem metallischen Werkstoff bestehen. Diese Werkstoffe besitzen gegenüber Natur- oder Polymerwerkstoffen höhere Festigkeiten und genügen somit hohen Ansprüchen bezüglich der Reduzierung der radialen Querschnittserweiterung des Wellschlauchs.

Es kann sich als günstig erweisen, wenn das Ringsegment formschlüssig mit dem Wellschlauch verbunden ist. Dadurch ist die radiale Abstützung des Wellschlauchs gegen das Ringsegment sicher gewährleistet und eine geometrische Lageveränderung des Ringsegments wird erschwert.

Von Vorteil kann es weiterhin sein, dass das Ringsegment stoffschlüssig mit dem Wellschlauch verbunden ist. Dadurch lässt sich die Eindämmung der radialen Querschnittserweiterung des Wellschlauchs verbessern und eine geometrische Lageveränderung des Ringsegments wird ausgeschlossen. Darüber hinaus wird durch den beschriebenen Stoffschluss die Längsdehnung des Wellschlauchs in gewissem Umfang reduziert.

Zudem kann es sich als günstig erweisen, wenn das Ringsegment derart mit dem Wellschlauch verbunden ist, dass es unter Zugspannung in Umfangsrichtung steht. Dadurch kann der radialen Querschnittserweiterung wirksam begegnet werden und eine geometrische Lageveränderung des Ringsegments wird weitgehend verhindert.

Es kann darüber hinaus vorteilhaft sein, dass wenigstens zwei Ringsegmente vorgesehen sind, zwischen denen zumindest eine der Wellungen anordnungsbar ist, wobei zumindest eine Verbindungseinrichtung vorgesehen ist, die sich zwischen den Ringsegmenten die zumindest eine der Wellungen überbrückend erstreckt und die Ringsegmente miteinander verbindet. Durch die Verbindungseinrichtung wird die Längsdehnung des Wellschlauchs drastisch verringert, wodurch auch die Schwingungen des Wellschlauchs weiter eingedämmt werden. Trotz der Verbindungseinrichtung bleibt der damit versehene Wellschlauch ausreichend flexibel.

In einer weiteren vorteilhaften Ausgestaltung der Erfindung wird die Verbindungseinrichtung durch einen Verbindungsabschnitt gebildet, der die beiden Ringsegmente verbindet, wobei der Verbindungsabschnitt mit wenigstens einem der Ringsegmente fest verbunden ist. Auf diese Weise kann eine Verbindungseinrichtung realisiert werden, die modular aufgebaut ist, so dass einzelne Elemente bestehend aus einem Ringsegment und einem Verbindungsabschnitt mit einem weiteren gleichartigen Element verbindbar sind, das ebenfalls aus einem Ringsegment oder einem Verbindungsabschnitt besteht, um dadurch die Stabilisierungseinrichtung individuell an die Länge des Wellabschnitts des Schlauchs oder die Anzahl der Wellungen anzupassen.

Es kann sich als günstig erweisen, wenn der Verbindungsabschnitt mit wenigstens einem der Ringsegmente lösbar verbindbar ist, wodurch ebenfalls ein modularer Aufbau der Stabilisierungseinrichtung bei gleichzeitig vereinfachter Montage ermöglicht wird.

Es kann von Vorteil sein, wenn der Verbindungsabschnitt aus einem Naturstoff besteht, vorzugsweise aus Baumwolle oder Cellulose. Diese Stoffe sind äußerst kostengünstig und gleichzeitig sehr umweltfreundlich bei guten Dämpfungseigenschaften.

Es kann weiterhin von Vorteil sein, wenn der Verbindungsabschnitt aus einem polymeren Werkstoff besteht, vorzugsweise aus Polyester, Polyamid, Polypropylen, Polyethylen oder Aramid. Diese Werkstoffe weisen sehr gute mechanische Kennwerte auf, besitzen sehr gute Reibeigenschaften und eine hohe Beständigkeit gegenüber im Motorraum üblicherweise vorkommenden Medien. Darüber hinaus lassen sich leicht verarbeiten und besitzen sehr gute Dämpfungseigenschaften.

Zudem kann es von Vorteil sein, wenn der Verbindungsabschnitt aus einem anorganisch-nichtmetallischen oder einem metallischen Werkstoff besteht. Solche Werkstoffe besitzen gegenüber Natur- oder Polymerwerkstoffen höhere Festigkeiten und ein geringeres Dehnungsvermögen.

Auch kann es sich als günstig erweisen, wenn der Verbindungsabschnitt mit wenigstens einem der Ringsegmente einstückig verbunden ist, wobei Ringsegment und Verbindungsabschnitt aus dem gleichen Material bestehen. Dadurch lässt sich eine erhebliche Vereinfachung der Herstellung und der Montage erzielen.

Dabei kann es vorteilhaft sein, alle Ringsegmente und Verbindungsabschnitte einstückig miteinander zu verbinden, wobei Ringsegment und Verbindungsabschnitt aus dem gleichen Material bestehen. Dadurch kann eine besonders einfache, kostengünstige und stabile Stabilisierungseinrichtung realisiert werden.

In einer weiteren vorteilhaften Ausgestaltung der Erfindung kann der Verbindungsabschnitt auf der zumindest einen Wellung wenigstens abschnittsweise anliegen, wodurch ein käfigartiges Einfassen des Wellschlauches realisiert wird. Durch das zumindest abschnittsweise Aufliegen des Verbindungsabschnitt auf der Wellung wird die Stabilisierungswirkung verbessert.

Weiterhin kann es sich als günstig erweisen, wenn die die Ringsegmente verbindenden Verbindungsabschnitte entlang einer Linie, vorzugsweise in Längsrichtung des Wellabschnitts angeordnet sind. Auf diese Weise ist es möglich, dass die einzelnen Verbindungsabschnitte in der Art eines Bandes entlang des Wellabschnitts verlaufen, um dadurch die Dehnung in Längsrichtung effizient zu begrenzen.

Weiterhin kann es sich als günstig erweisen, wenn die Verbindungsabschnitte im Wesentlichen bandförmig gestaltet sind. Auf diese Weise kann eine sehr leichte und kostengünstig herzustellende Stabilisierungseinrichtung hergestellt werden. Zusätzlich kann durch eine solche Gestaltung insbesondere die Dehnung in Längsrichtung des Wellschlauches kontrolliert begrenzt werden bei gleichzeitiger Biegeflexibilität des Schlauches.

Dabei kann es sich als vorteilhaft erweisen, wenn die Breite der Verbindungsabschnitte in Umfangsrichtung des Wellabschnitts im Wesentlichen gleich oder geringer dem Abstand zwischen den zwei durch den Verbindungsabschnitt verbundenen Ringsegmente ist. Auch dadurch lässt sich eine besonders leichte aber dennoch effiziente Stabilisierungseinrichtung realisieren.

Weiterhin kann es dabei von Vorteil sein, wenn die Breite der Verbindungsabschnitte im Wesentlichen dem halben Abstand zwischen den beiden durch die Verbindungsabschnitte verbundenen Ringsegmente entspricht. Auch dadurch lässt sich eine besonders effiziente und leichte Stabilisierungseinrichtung erreichen, die in der Lage ist, die Längsdehnung des Wellschlauches effizient zu begrenzen und gleichzeitig eine große Biegeflexibilität des Wellschlauchs zulässt.

Um die Dehnung in Längsrichtung des Wellschlauches noch besser zu kontrollieren, kann es sich als günstig erweisen, wenn am Umfang der Ringsegmente wenigstens zwei voneinander beabstandete Verbindungsabschnitte vorgesehen sind.

Von Vorteil kann es dabei sein, wenn die in Umfangsrichtung voneinander beabstandeten Verbindungsabschnitte auf einander gegenüberliegenden Seiten der Ringsegmente angeordnet sind. Dadurch kann einerseits die Längsdehnung des Wellschlauches kontrolliert begrenzt werden und andererseits eine gezielte Biegeflexibilität des Wellschlauches beibehalten werden. Die Biegeflexibilität des Wellschlauchs bleibt insbesondere in einer Richtung erhalten, bei der die Verbindungsabschnitte im Wesentlichen in der neutralen Linie der Biegung liegen.

Von Vorteil kann es zudem sein, wenn in Umfangsrichtung der Ringsegmente die Verbindungsabschnitte um 120° zueinander versetzt angeordnet sind. Auf diese Weise lässt sich die Festigkeit der Stabilisierungseinrichtung verbessern.

In einer alternativen Ausführungsform kann es sich als günstig erweisen, wenn in Umfangsrichtung der Ringsegmente die Verbindungsabschnitte um 90° zueinander versetzt angeordnet sind. Auf diese Weise lässt sich ebenfalls die Festigkeit der Stabilisierungseinrichtung verbessern.

Weiter kann es sich als vorteilhaft erweisen, wenn in Umfangsrichtung benachbarte Verbindungsabschnitte unterschiedliche Längen aufweisen. Dadurch ist es möglich, dem Wellschlauch eine Krümmung vorzugeben.

Weiterhin können zwei benachbarte Halteabschnitte einen Winkel einschließen, so dass der Schlauch eine Krümmung aufweist. Dabei ist es denkbar, dass die Verbindungsabschnitte zunächst von im Wesentlichen gleicher Länge sind, aufgrund der Krümmung des Wellschlauchs jedoch die krümmungsinneren Verbindungsabschnitte sozusagen durchhängen, wohingegen die krümmungsäußeren Verbindungsabschnitte gespannt sind.

In einer weiteren vorteilhaften Ausgestaltung der Erfindung können die Verbindungsabschnitte schräg zur Längserstreckung des Wellschlauchs verlaufen. Dadurch kann die Flexibilität des Wellschlauchs erhöht werden.

Von Vorteil kann es dabei auch sein, wenn sich die Verbindungsabschnitte kreuzen. Auf diese Weise kann gezielt die Festigkeit oder die Flexibilität des Schlauchs beeinflusst werden.

Weiterhin bezieht sich die Erfindung auf ein Wellschlauch mit zumindest einem Wellabschnitt, der wenigstens eine gegenüber dem Wellschlauch vorstehende Wellung aufweist, die sich zumindest abschnittsweise in Umfangsrichtung des Wellschlauchs erstreckt und mit einer Stabilisierungseinrichtung nach einem der vorangegangenen Ansprüche.

Darüber hinaus bezieht sich die Erfindung auf ein Wellschlauch mit zumindest einem Wellabschnitt, der wenigstens eine gegenüber dem Wellschlauch vorstehende Wölbung mit im Wesentlichen halbkreisförmiger Kontur aufweist, die sich zumindest abschnittsweise in Umfangsrichtung des Wellschlauchs erstreckt, wobei sich an den Wellabschnitt beidseitig ein Wellschlauchabschnitt mit im Wesentlichen konstantem Durchmesser anschließt, und mit einer Stabilisierungseinrichtung nach einem der vorangegangenen Ansprüche.

Zudem bezieht sich die Erfindung auf ein Verfahren zur außenseitigen Aufbringung der beschriebenen Stabilisierungseinrichtung auf einen Wellschlauch.

Dabei kann es von Vorteil sein, dass die Stabilisierungseinrichtung durch kontinuierliches Umstricken des Wellschlauchs aufgebracht wird. Dieses Verfahren ist einfach und kostengünstig anwendbar und erlaubt eine gezielte Anpassung der Stabilisierungseinrichtung bezüglich seiner Struktur bzw. seiner geometrischen Abmessungen an die jeweilige Belastung des Wellschlauchs.

Dabei kann es sich als günstig erweisen, dass für das kontinuierliche Umstricken automatische Rundstrickmaschinen verwendet werden, die eine rationelle Fertigung bei hoher Fertigungsqualität und breiter Variationsmöglichkeit erlauben.

Es kann vorteilhaft sein, dass im Falle eines elastomeren Wellschlauchs die Stabilisierungsvorrichtung auf den rohen Wellschlauch aufgestrickt wird. Eine sehr einfaches und rationelles Aufstricken gelingt insbesondere dann, wenn der Schlauch im rohen Zustand noch keine Wellungen aufweist.

Weiterhin kann es sich als günstig erweisen, an Stelle des Strickverfahrens ein Flechtverfahren, ein Webverfahren oder ein Wirkverfahren anzuwenden. Durch die verschiedenen Verfahren kann eine Struktur der Stabilisierungseinrichtung gewählt werden, die den jeweiligen Beanspruchungen des Wellschlauchs im Betrieb am besten genügen.

Zudem kann es von Vorteil sein, wenn die Stabilisierungseinrichtung über den Wellschlauch gezogen wird. Dadurch gelingt eine sehr einfache und schnelle Montage.

Dabei kann es günstig sein, dass der Wellschlauch aus elastomerem Material besteht und die Stabilisierungseinrichtung über den elastomeren Wellschlauch im vor-vulkanisierten oder vulkanisierten Zustand gezogen wird, wodurch eine günstige Handhabung während der Montage gewährleistet wird.

Nachfolgend wird die Wirkungs- und Funktionsweise der Erfindung näher erläutert:

Es zeigen:
- Fig. 1: eine erste Ausführungsform der erfindungsgemäßen Stabilisierungseinrichtung mit einem Wellschlauch;
- Fig. 2: eine erfindungsgemäße Stabilisierungseinrichtung mit Wellschlauch gemäß einer zweiten Ausführungsform;
- Fig. 3: eine dritte Ausführungsform der erfindungsgemäßen Stabilisierungseinrichtung mit Wellschlauch.

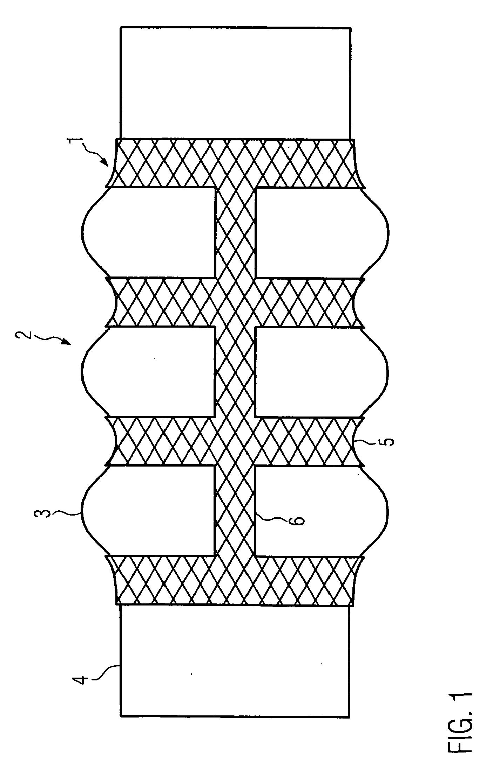

Figur 1 zeigt die erfindungsgemäße Stabilisierungseinrichtung 1 mit einem Wellschlauch 2 in einer Seitenansicht.

Der Wellschlauch besteht aus flexiblem, elastomeren Material und ist im Wesentlichen rohrförmig. In der dargestellten Ausführungsform ist der Wellschlauch gerade und verfügt über einen Wellabschnitt mit drei regelmäßig voneinander beabstandeten Wellungen 3. Selbstverständlich kann der Schlauch mehr oder weniger Wellungen aufweisen. Ebenso kann der Wellschlauch auch gekrümmt verlaufen.

Die Wellungen verlaufen im Wesentlichen ringförmig in Umfangsrichtung des Wellschlauchs, wobei der größte Durchmesser der Wellungen 3 größer als die zylindrischen Außenflächen 4 des Wellschlauchs benachbart zu den Wellungen 3 ist. Die Gestalt der Wellungen kann sich ebenfalls unterscheiden. So ist es denkbar in der Darstellung in Figur 1 von links nach rechts z. B. den Außendurchmesser der Wellungen mit jeder Wellung größer werden zu lassen. Die Außenumfänge der Wellungen liegen dann im Wesentlichen innerhalb einer konischen Fläche. Ebenso kann der Außendurchmesser der Wellungen von den äußeren Wellungen zur inneren Wellung abnehmen oder zunehmen.

Der dargestellte Wellschlauch 2 ist dafür vorgesehen; im Kraftfahrzeugbereich als sogenannter Ladeluftschlauch eingesetzt zu werden.

Die Stabilisierungseinrichtung 1 besteht z.B. aus Aramid. Sie besteht aus mehreren gestrickten Ringsegmenten 5, die parallel zueinander angeordnet und im Wesentlichen bandförmig gestaltet sind. In der Darstellung in Figur 1 umgeben die Ringsegmente 5 den Wellschlauch, wobei vier Ringsegmente 5 vorgesehen sind und die beiden inneren Ringsegmente in den Tälern zwischen zwei benachbarten Wellen angeordnet sind. Die Umfangslänge der dargestellten Ringsegmente ist im montierten Zustand im Wesentlichen gleich. Selbstverständlich kann die Form und Größe der Ringsegmente an die Anzahl der Wellungen angepasst sein. Ebenso ist es denkbar, zwischen zwei Ringsegmenten zwei oder mehrere Wellungen vorzusehen.

Die Ringsegmente sind durch Verbindungsabschnitte 6 einstückig miteinander verbunden und an die Ringsegmente angestrickt. Diese Verbindungsabschnitte 6 erstrecken sich jeweils zwischen benachbarten Ringsegmenten und sind an den Verlauf der Wellungen angepasst. Die Verbindungsabschnitte 6 erstrecken sich im Wesentlichen in Längsrichtung des Wellabschnitts des Wellschlauchs. Sie sind im Wesentlichen bandförmig gestaltet, wobei ihre Breite in Umfangsrichtung des Wellschlauchs im Wesentlichen der Breite der Ringsegmente 5 in Längsrichtung des Wellschlauchs entspricht.

Jeweils zwei Verbindungsabschnitte 6 verbinden zwei benachbarte Ringsegmente 5. Dabei sind die beiden Verbindungsabschnitte 6 in Umfangsrichtung um 180° versetzt angeordnet (die um 180° versetzten Verbindungsabschnitte gegenüber den dargestellten Verbindungsabschnitten sind in Figur 1 nicht zu sehen). Alternativ können auch mehrere Verbindungsabschnitte 6 am Umfang verteilt vorgesehen sein. Denkbar wären z. B. drei Verbindungsabschnitte, die jeweils um 120° versetzt angeordnet sind. Ebenso können auch vier Verbindungsabschnitte 6 z. B. um 90° zueinander versetzt vorgesehen sein.

Die Verbindungsabschnitte 6 sind mit den Ringsegmenten 5 einstückig ausgeführt und bestehen aus dem gleichen Material. Denkbar wäre es bei einer alternativen Ausführungsform eine Verbindungseinrichtung vorzusehen, durch die die Verbindungsabschnitte 6 jeweils mit einem Halteabschnitt 5 vorzugsweise lösbar miteinander verbunden sind. Bei einer solchen Ausführungsform wäre dann immer ein Ringsegment 5 mit einem Verbindungsabschnitt 6 fest verbunden und mit einem benachbarten Ringsegment 5 koppelbar, um dadurch modular die Stabilisierungseinrichtung an die Länge des Wellabschnitts eines Wellschlauchs anzupassen.

Nachfolgend wird die Wirkungs- und Funktionsweise der Erfindung näher erläutert.

Der Wellschlauch 2 wird als Ladeluftschlauch im Automobilbereich eingesetzt. Beim Einsatz als Ladeluftschlauch werden große Mengen Luft durch den Ladeluftschlauch in die Brennkraftmaschine, beispielsweise ein Turbo-Diesel, gefördert. Da das Fördern der Luft aufgrund der Brennkraftmaschine pulsierend erfolgt, wird der Schlauch in Schwingungen versetzt. Hierbei treten unterschiedliche Schwingungen auf. Insbesondere werden hochfrequente Schwingungen erzeugt, die den Geräuschkomfort des Fahrzeugs erheblich beeinträchtigen. Darüber hinaus sind die Motorräume gegenwärtiger Kraftfahrzeuge sehr eng ausgelegt und die Ladeluftschläuche müssen häufig Krümmungen im Raum folgen, um den Ladeluftkühler mit der Brennkraftmaschine zu verbinden. Dabei befinden sich andere Bauteile der Brennkraftmaschine sehr nahe am Ladeluftschlauch. Aufgrund der Schwingungen des Ladeluftschlauchs kann es dabei zu Dehnungen in Längsrichtung kommen, die dazu führen, dass der Ladeluftschlauch mit anderen Teilen in Berührung gelangt und dadurch beschädigt wird. Durch die erfindungsgemäße Stabilisierungseinrichtung soll dies verhindert werden. So wird durch die Stabilisierungseinrichtung sowohl die radiale, als auch die axiale Festigkeit des Ladeluftschlauchs erhöht. Durch die gestrickte Struktur der Stabilisierungseinrichtung ergibt sich zudem eine äußerst hohe Flexibilität, die selbst starke Krümmungen im Raum zulässt, wodurch auch bei sehr beengten Verhältnissen ein Verlegen des Ladeluftschlauches im Motorraum ermöglicht wird. Gleichzeitig vermag die gestrickte Struktur mit ihrem hohen Dämpfungsvermögen das Schwingungsverhalten des Ladeluftschlauchs in gewünschter Weise zu beeinflussen. Durch die zusätzliche Stabilisierung ist es möglich, das Ansauggeräusch des Kraftfahrzeugs im Bereich des Ladeluftschlauchs deutlich herabzusetzen und der radialen Aufweitung bzw. der axialen Längung effektiv entgegenzuwirken.

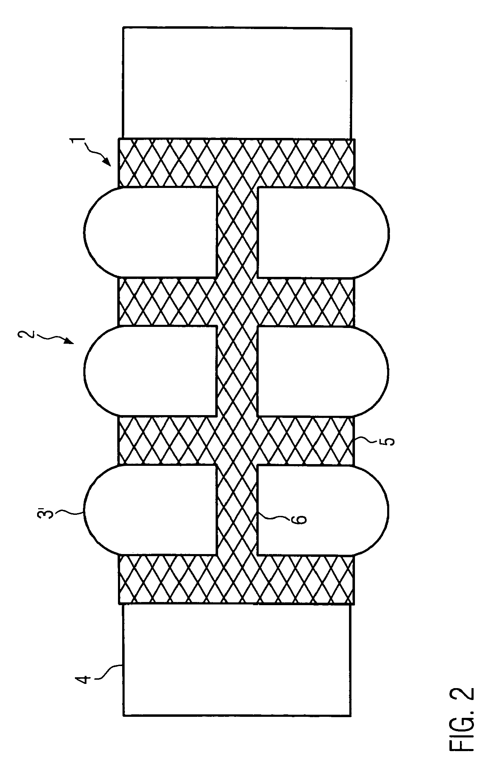

In Figur 2 ist eine zweite Ausführungsform der Erfindung dargestellt. Um Wiederholungen zu vermeiden, wird lediglich auf die Unterschiede zur ersten Ausführungsform eingegangen.

Im Gegensatz zur ersten Ausführungsform weist bei der zweiten Ausführungsform der mit der Stabilisierungseinrichtung verbundene Wellschlauch 2 anstatt Wellungen 3 Wölbungen 3' mit im Wesentlichen halbkreisförmiger Kontur auf, wobei der größte Durchmesser der Wölbungen 3' größer als die zylindrischen Außenflächen 4 des Wellschlauchs benachbart zu den Wölbungen 3' ist. An die Wölbungen 3' schließen sich beidseitig Wellschlauchabschnitte mit im Wesentlichen konstantem Durchmesser an, wobei der Durchmesser in besagtem Wellschlauchabschnitt im Wesentlichen mit dem Durchmesser der zylindrischen Außenfläche 4 des Wellschlauchs übereinstimmt. Die Gestalt der Wölbungen kann sich unterscheiden. So ist es denkbar in der Darstellung in Figur 2 von links nach rechts z. B. den Außendurchmesser der Wölbungen mit jeder Wölbung größer werden zu lassen. Die Außenumfänge der Wölbungen liegen dann im Wesentlichen innerhalb einer konischen Fläche. Ebenso kann der Außendurchmesser der Wölbungen von den äußeren Wölbungen zur inneren Wölbung abnehmen oder zunehmen.

Die Wirkungsweise der zweiten Ausführungsform entspricht im Wesentlichen der ersten, wobei sich durch die veränderte Kontur des Wellschlauchs Vorteile hinsichtlich einer sehr stabilen und genauen Positionierung der Ringsegmente auf dem Wellschlauch ergeben. Dadurch wird einer Bewegung der Stabilisierungseinrichtung in Längsrichtung des Wellschlauchs wirksam entgegengewirkt.

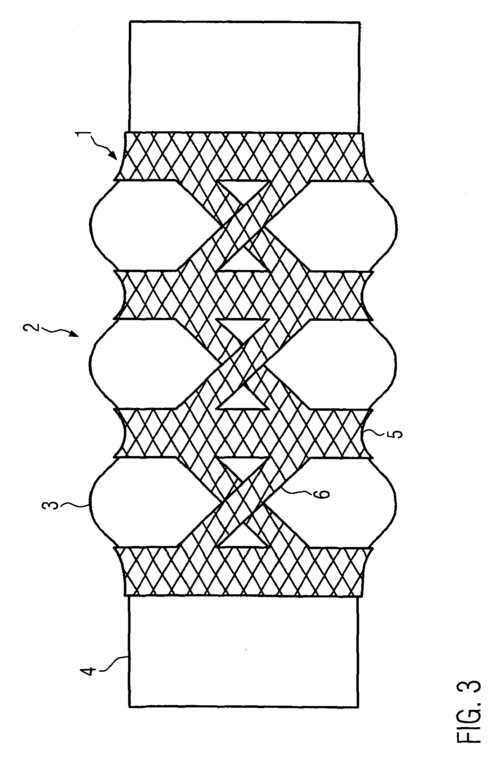

In Figur 3 ist eine dritte Ausführungsform dargestellt. Um Wiederholungen zu vermeiden, wird auch hier nur auf die Unterschiede zur ersten Ausführungsform eingegangen.

Anders als bei der ersten Ausführungsform weist diese Ausführungsform Verbindungsabschnitte 6 auf, die schräg zur Längserstreckung des Wellschlauchs verlaufen und sich gegenseitig kreuzen. In der dargestellten Ausführungsform verbinden jeweils vier Verbindungsabschnitte 6 zwei benachbarte Ringsegmente 5. Dabei sind jeweils zwei Verbindungsabschnitte 6 in Umfangsrichtung um 180° versetzt angeordnet (die um 180° versetzten Verbindungsabschnitte gegenüber den dargestellten Verbindungsabschnitten sind in Figur 3 nicht zu sehen). Alternativ können auch mehrere sich kreuzende Verbindungsabschnitte 6 am Umfang verteilt vorgesehen sein.

Der Vorteil schräg zur Längserstreckung verlaufender und sich kreuzender Verbindungsabschnitte gegenüber in Längsrichtung des Wellschlauchs verlaufender Verbindungsabschnitte ergibt sich in erster Linie in einer erhöhten Stabilität des Wellschlauchs sowohl in radialer als auch in axialer Richtung, wobei die Verstärkung gezielt durch den Überdeckungswinkel anpassbar ist. Zudem verhindert die beschriebene Anordnung der Verbindungsabschnitte effektiv die gegenseitige Lageänderung benachbarter Ringsegmente, vor allen Dingen aber eine Verdrehung in Umfangsrichtung.

Nachfolgend wird das erfindungsgemäße Verfahren zur außenseitigen Aufbringung der beschriebenen Stabilisierungseinrichtung auf einen Wellschlauch erläutert.

Die außenseitige Aufbringung der Stabilisierungseinrichtung auf einen Wellschlauch kann in einem bevorzugten Verfahren durch kontinuierliches Umstricken des Wellschlauchs, vorzugsweise mit einer automatischen Rundstrickmaschine, erfolgen. Im Falle eines elastomeren Wellschlauchs kann es von Vorteil sein, dass die Stabilisierungseinrichtung auf den noch rohen Schlauch aufgestrickt wird. Vorzugsweise weist der Schlauch in diesem Zustand noch keine Wellungen auf. In einem nachfolgenden Schritt wird dem Schlauch die wellenförmige Kontur angeformt bzw. aufgeprägt, wobei sich die aufgestrickte Stabilisierungseinrichtung der Wellenform derart anpasst, dass die Ringsegmente in den Wellentälem angeordnet sind und über die Verbindungsabschnitte, die an den dazwischen liegenden Wellenbergen anliegen, verbunden sind. Schließlich wird die wellenförmige Kontur des Wellschlauchs durch Vulkanisation fixiert. Es ist ebenso denkbar, anstatt des beschriebenen Strickverfahrens ein Wirk-, Web- oder Flechtverfahren anzuwenden.

In einem anderen bevorzugten Verfahren wird die Stabilisierungseinrichtung über den Wellschlauch gezogen. Im Falle eines elastomeren Wellschlauchs geschieht dies entweder nach der Vor-Vulkanisation, oder nach der Vulkanisation. Dadurch ist die notwendige Handhabbarkeit des Wellschlauchs zum Überziehen der Stabilisierungseinrichtung gewährleistet.

## Patentansprüche

1. Stabilisierungseinrichtung für einen Wellschlauch (2), der wenigstens einen Wellabschnitt mit zumindest einer gegenüber dem Wellschlauch (2) vorstehenden, sich wenigstens abschnittsweise im Wesentlichen in Umfangsrichtung des Wellschlauchs (2) erstreckenden Wellung (3) aufweist, wobei die Stabilisierungseinrichtung (1) wenigstens ein Ringsegment (5) aufweist, das bei auf dem Wellschlauch (2) montierten Zustand den Wellschlauch (2) benachbart zur Wellung (3) umfänglich umgibt, **dadurch gekennzeichnet, dass** das Ringsegment (5) ein im Wesentlichen flächiges Gebilde ist, das einzelne und zueinander angeordnete Fäden oder Stränge aufweist.

2. Stabilisierungseinrichtung nach Anspruch 1, **dadurch gekennzeichnet, dass** das Ringsegment (5) eine gestrickte oder gewirkte Struktur aufweist.

3. Stabilisierungseinrichtung nach Anspruch 1, **dadurch gekennzeichnet, dass** das Ringsegment (5) eine gewebte oder geflochtene Struktur aufweist.

4. Stabilisierungseinrichtung nach zumindest einem der vorangegangenen Ansprüche, **dadurch gekennzeichnet, dass** die das Ringsegment (5) bildenden Fäden oder Stränge aus einem Naturstoff bestehen, vorzugsweise aus Baumwolle oder Cellulose.

5. Stabilisierungseinrichtung nach zumindest einem der vorangegangenen Ansprüche, **dadurch gekennzeichnet, dass** die das Ringsegment (5) bildenden Fäden oder Stränge aus einem polymeren Werkstoff bestehen, vorzugsweise aus Polyester, Polyamid, Polypropylen, Polyethylen oder Aramid.

6. Stabilisierungseinrichtung nach zumindest einem der vorangegangenen Ansprüche, **dadurch gekennzeichnet, dass** die das Ringsegment (5) bildenden Fäden oder Stränge aus einem anorganisch-nichtmetallischen oder einem metallischen Werkstoff bestehen.

7. Stabilisierungseinrichtung nach zumindest einem der vorangegangenen Ansprüche, **dadurch gekennzeichnet, dass** das Ringsegment (5) formschlüssig mit dem Wellschlauch (2) verbunden ist.

8. Stabilisierungseinrichtung nach zumindest einem der vorangegangenen Ansprüche, **dadurch gekennzeichnet, dass** das Ringsegment (5) stoffschlüssig mit dem Wellschlauch (2) verbunden ist.

9. Stabilisierungseinrichtung nach zumindest einem der vorangegangenen Ansprüche, **dadurch gekennzeichnet, dass** das Ringsegment (5) derart mit dem Wellschlauch (2) verbunden ist, dass es unter Zugspannung in Umfangsrichtung steht.

10. Stabilisierungseinrichtung nach zumindest einem der vorangegangenen Ansprüche, **dadurch gekennzeichnet, dass** wenigstens zwei Ringsegmente (5) vorgesehen sind, zwischen denen zumindest eine der Wellungen (3) anordnungsbar ist, wobei zumindest eine Verbindungseinrichtung vorgesehen ist, die sich zwischen den Ringsegmenten (5) die zumindest eine der Wellungen (3) überbrückend erstreckt und die Ringsegmente (5) miteinander verbindet.

11. Stabilisierungseinrichtung nach zumindest einem der vorangegangenen Ansprüche, **dadurch gekennzeichnet, dass** die Verbindungseinrichtung durch einen Verbindungsabschnitt (6) gebildet wird, der die beiden Ringsegmente (5) verbindet, wobei der Verbindungsabschnitt (6) mit wenigstens einem der Ringsegmente (5) fest verbunden ist.

12. Stabilisierungseinrichtung nach zumindest einem der vorangegangenen Ansprüche, **dadurch gekennzeichnet, dass** der Verbindungsabschnitt (6) mit wenigstens einem der Ringsegmente (5) lösbar verbindbar ist.

13. Stabilisierungseinrichtung nach zumindest einem der vorangegangenen Ansprüche, **dadurch gekennzeichnet, dass** der Verbindungsabschnitt (6) aus einem Naturstoff besteht, vorzugsweise aus Baumwolle oder Cellulose.

14. Stabilisierungseinrichtung nach zumindest einem der vorangegangenen Ansprüche, **dadurch gekennzeichnet, dass** der Verbindungsabschnitt (6) aus einem polymeren Werkstoff besteht, vorzugsweise aus Polyester, Polyamid, Polypropylen, Polyethylen oder Aramid.

15. Stabilisierungseinrichtung nach zumindest einem der vorangegangenen Ansprüche, **dadurch gekennzeichnet, dass** der Verbindungsabschnitt (6) aus einem anorganisch-nichtmetallischen oder einem metallischen Werkstoff besteht.

16. Stabilisierungseinrichtung nach zumindest einem der vorangegangenen Ansprüche, **dadurch gekennzeichnet, dass** der Verbindungsabschnitt (6) mit wenigstens einem der Ringsegmente (5) einstückig verbunden ist, wobei Ringsegment (5) und Verbindungsabschnitt (6) aus dem gleichen Material bestehen.

17. Stabilisierungseinrichtung nach zumindest einem der vorangegangenen Ansprüche, **dadurch gekennzeichnet, dass** alle Ringsegmente (5) und Verbindungsabschnitte (6) einstückig miteinander verbunden sind, wobei Ringsegment (5) und Verbindungsabschnitt (6) aus dem gleichen Material bestehen.

18. Stabilisierungseinrichtung nach zumindest einem der vorangegangenen Ansprüche, **dadurch gekennzeichnet, dass** der Verbindungsabschnitt (6) auf der zumindest einen Wellung (3) wenigstens abschnittsweise anliegt.

19. Stabilisierungseinrichtung nach zumindest einem der vorangegangenen Ansprüche, **dadurch gekennzeichnet, dass** die die Ringsegmente (5) verbindenden Verbindungsabschnitte (6) entlang einer Linie, vorzugsweise in Längsrichtung des Wellabschnitts angeordnet sind.

20. Stabilisierungseinrichtung nach zumindest einem der vorangegangenen Ansprüche, **dadurch gekennzeichnet, dass** die Verbindungsabschnitte (6) im Wesentlichen bandförmig gestaltet sind.

21. Stabilisierungseinrichtung nach zumindest einem der vorangegangenen Ansprüche, **dadurch gekennzeichnet, dass** die Breite der Verbindungsabschnitte (6) in Umfangsrichtung des Wellabschnitts im Wesentlichen gleich oder geringer dem Abstand zwischen den beiden durch den Verbindungsabschnitt (6) verbundenen Ringsegmente (5) ist.

22. Stabilisierungseinrichtung nach zumindest einem der vorangegangenen Ansprüche, **dadurch gekennzeichnet, dass** die Breite der Verbindungsabschnitte (6) im Wesentlichen dem halben Abstand zwischen den beiden durch den Verbindungsabschnitt (6) verbundenen Ringsegmente (5) entspricht.

23. Stabilisierungseinrichtung nach zumindest einem der vorangegangenen Ansprüche, **dadurch gekennzeichnet, dass** am Umfang der Ringsegmente (5) wenigstens zwei voneinander beabstandete Verbindungsabschnitte (6) vorgesehen sind.

24. Stabilisierungseinrichtung nach zumindest einem der vorangegangenen Ansprüche, **dadurch gekennzeichnet, dass** die in Umfangsrichtung voneinander beabstandeten Verbindungsabschnitte (6) auf einander gegenüberliegenden Seiten der Ringsegmente (5) angeordnet sind.

25. Stabilisierungseinrichtung nach zumindest einem der vorangegangenen Ansprüche, **dadurch gekennzeichnet, dass** in Umfangsrichtung der Ringsegmente (5) drei um 120° versetzt zueinander angeordnete Verbindungsabschnitte (6) vorgesehen sind.

26. Stabilisierungseinrichtung nach zumindest einem der vorangegangenen Ansprüche, **dadurch gekennzeichnet, dass** in Umfangsrichtung der Ringsegmente (5) vier um 90° versetzt zueinander angeordnete Verbindungsabschnitte (6) vorgesehen sind.

27. Stabilisierungseinrichtung nach zumindest einem der vorangegangenen Ansprüche, **dadurch gekennzeichnet, dass** in Umfangsrichtung benachbarte Verbindungsabschnitte (6) unterschiedliche Längen aufweisen.

28. Stabilisierungseinrichtung nach zumindest einem der vorangegangenen Ansprüche, **dadurch gekennzeichnet, dass** zwei benachbarte Ringsegmente (5) einen Winkel einschließen, so dass der Schlauch eine Krümmung aufweist.

29. Stabilisierungseinrichtung nach zumindest einem der vorangegangenen Ansprüche, **dadurch gekennzeichnet, dass** die Verbindungsabschnitte (6) schräg zur Längserstreckung des Schlauches verlaufen.

30. Stabilisierungseinrichtung nach zumindest einem der vorangegangenen Ansprüche, **dadurch gekennzeichnet, dass** die Verbindungsabschnitte (6) sich kreuzen.

31. Wellschlauch mit zumindest einem Wellabschnitt, der wenigstens eine gegenüber dem Wellschlauch (2) vorstehende Wellung (3) aufweist, die sich zumindest abschnittsweise in Umfangsrichtung des Wellschlauchs (2) erstreckt und mit einer Stabilisierungseinrichtung (1) nach einem der vorangegangenen Ansprüche.

32. Wellschlauch mit zumindest einem Wellabschnitt, der wenigstens eine gegenüber dem Wellschlauch (2) vorstehende Wölbung (3') mit im Wesentlichen halbkreisförmiger Kontur aufinreist, die sich zumindest abschnittsweise in Umfangsrichtung des Wellschlauchs (2) erstreckt, wobei sich an die Wölbung (3') beidseitig ein Wellschlauchabschnitt mit im Wesentlichen konstantem Durchmesser anschließt, und mit einer Stabilisierungseinrichtung (1) nach einem der vorangegangenen Ansprüche.

33. Verfahren zur außenseitigen Aufbringung der Stabilisierungseinrichtung nach einem der vorangegangenen Ansprüche auf einen Wellschlauch.

34. Verfahren nach Anspruch 33, **dadurch gekennzeichnet, dass** die Stabilisierungseinrichtung durch kontinuierliches Umstricken des Wellschlauchs aufgebracht wird.

35. Verfahren nach Anspruch 33 oder 34, **dadurch gekennzeichnet, dass** für das kontinuierliche Umstricken automatische Rundstrickmaschinen verwendet werden.

36. Verfahren nach einem der Ansprüche 33 bis 35, **dadurch gekennzeichnet, dass** der Wellschlauch aus elastomerem Material besteht und die Stabilisierungsvorrichtung auf den rohen Wellschlauch aufgestrickt wird.

37. Verfahren nach einem der Ansprüche 33 bis 36, **dadurch gekennzeichnet, dass** an Stelle des Strickverfahrens ein Flechtverfahren, ein Webverfahren oder ein Wirkverfahren angewendet wird.

38. Verfahren zur außenseitigen Aufbringung der Stabilisierungseinrichtung nach einem der Ansprüche 1 bis 30 auf einen Wellschlauch, **dadurch gekennzeichnet, dass** die Stabilisierungseinrichtung über den Wellschlauch gezogen wird.

39. Verfahren nach Anspruch 38, **dadurch gekennzeichnet, dass** der Wellschlauch aus elastomerem Material besteht und die Stabilisierungseinrichtung über den elastomeren Wellschlauch im vor-vulkanisierten oder vulkanisierten Zustand gezogen wird.
